# DEMANDE DE BREVET EUROPEEN

(11) **EP 2 023 117 A1**
(43) Date de publication de la demande: **11.02.2009**
(21) Numéro de dépôt: 08300237.8
(22) Date de dépôt: 11.07.2008
(51) Int. Cl.: G01M 15/02, G01M 15/09, G01M 15/10

(54) **Procede de suralimentation d'un moteur monocylindre sur banc et dispositif correspondant**

(30) Priorité: 23.07.2007 FR 0705351
(71) Demandeur: Renault S.A.S., 92100 Boulogne-Billancourt (FR)
(72) Inventeur: Grando, M. Thierry, 92330 Sceaux (FR); Letateley, M. Marcel, 91460 Marcoussis (FR)

(57) **Abrégé**

L'invention concerne un procédé, et un dispositif correspondant, de suralimentation d'un banc moteur monocylindre pour simuler le comportement d'un moteur cible, le procédé comprenant les étapes consistant à :
- conditionner de l'air à l'admission du banc moteur,
- mettre en fonctionnement le moteur sur banc, et
- régler le point de fonctionnement du banc moteur,

caractérisé en ce qu'il comprend en outre une étape consistant à :
- piloter une perte de charge à l'échappement.

De préférence, le pilotage d'une perte de charge à l'échappement comprend une étape consistant à piloter la position d'une vanne à l'échappement (Vech) disposée sur la ligne d'échappement par une consigne de pression à l'échappement (Pech).

## Description

La présente invention concerne le domaine des bancs moteurs monocylindre.

Plus précisément, selon un premier de ses objets, l'invention concerne un procédé de suralimentation d'un moteur monocylindre sur banc, comprenant des étapes consistant à :
- conditionner de l'air à l'admission du moteur sur banc,
- mettre en fonctionnement, et
- régler le moteur sur banc en un point de fonctionnement déterminé pour simuler le comportement d'un moteur cible.

Dans le cas où le moteur cible est un moteur multicylindres équipé d'un turbocompresseur, le turbocompresseur fonctionne avec l'ensemble des cylindres, aussi est-il impossible de simuler complètement un moteur turbo multicylindres sur un banc monocylindre.

La présente invention a pour but de remédier à cet inconvénient en proposant une solution visant à simuler sur le banc moteur monocylindre le fonctionnement d'un turbocompresseur pour moteur multicylindres de sorte que des essais effectués sur le banc monocylindre soient représentatifs de la réalité du moteur multicylindre cible équivalent.

Avec cet objectif en vue, le dispositif selon l'invention, par ailleurs conforme au préambule cité ciavant, est essentiellement caractérisé en ce qu'il comprend en outre une étape consistant à piloter une perte de charge à l'échappement dudit moteur sur banc.

Grâce à cette caractéristique de pilotage d'une perte de charge à l'échappement, couplée au conditionnement de l'air à l'admission du banc moteur, un moteur turbo multicylindre peut être simulé sur un banc moteur monocylindre.

Selon un autre de ses objets, l'invention concerne un dispositif de suralimentation d'un banc moteur monocylindre susceptible de mettre en oeuvre le procédé selon l'invention, le dispositif comprenant :
- des moyens de conditionnement de l'air à l'admission du banc moteur,
- des moyens de pilotage d'une perte de charge à l'échappement comprenant :

- une vanne à l'échappement (Vech) disposée sur la ligne d'échappement du banc moteur, et
- des moyens de pilotage de la position de la vanne à l'échappement (Vech).

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 illustre un mode de réalisation du dispositif selon l'invention,

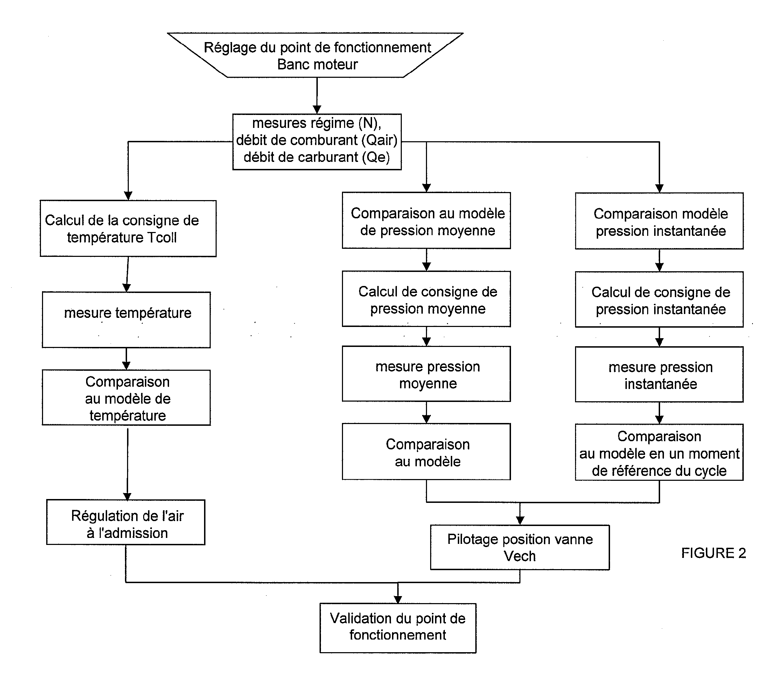

- la figure 2 illustre un mode de réalisation du procédé selon l'invention,
- la figure 3 illustre un mode de réalisation des moyens de régulation de la température de l'air à l'admission du banc moteur selon l'invention.

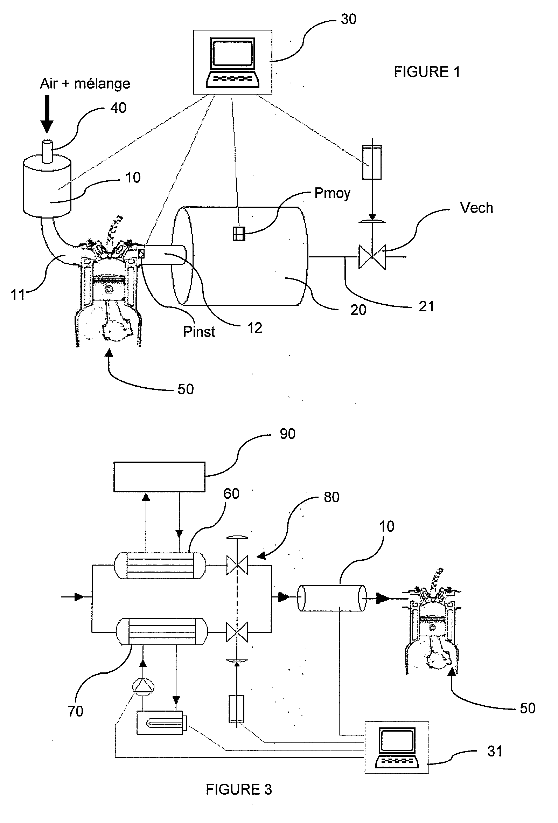

Un banc moteur monocylindre est illustré de manière schématique sur la figure 1.

Le banc moteur comprend une arrivée d'air 40, un plénum d'admission 10, un collecteur d'admission 11, un moteur monocylindre 50 équipé d'au moins une soupape d'admission et d'au moins une soupape d'échappement interfacées entre le cylindre et un collecteur d'échappement 12 débouchant dans un plénum d'échappement 20 en aval duquel se situe une ligne d'échappement 21.

Le dispositif de suralimentation du banc moteur monocylindre selon l'invention comprend des moyens de conditionnement de l'air à l'admission du banc moteur.

Les moyens de conditionnement de l'air à l'admission du banc moteur comprennent des moyens de mise sous pression de l'air à l'admission et de préférence en outre des moyens de régulation de la température de l'air à l'admission en fonction d'une consigne de température Tcoll décrits ci-dessous.

Il est proposé dans l'art antérieur des moyens de régulation de la température de l'air à l'admission utilisant une canne chauffante électrique pour réchauffer l'air. Cet état de l'art ne permet pas de réguler précisément la température de l'air admission du moteur pour les très faibles débits, car sous les très faibles débits, la vitesse de l'air autour de la canne chauffante est quasi nulle, et il est quasi impossible d'effectuer un échange thermique convectif entre la canne et l'air.

Au contraire, dans un mode de réalisation de l'invention, illustré à la figure 3, les moyens de régulation de la température de l'air à l'admission en fonction d'une consigne de température Tcoll comprennent, en amont du plenum d'admission 10, un échangeur air/eau froide 60 et un échangeur air/eau chaude 70 montés en parallèle et munis de volets contrarotatifs 80 pilotés par des moyens de pilotage de la température 31, de préférence sous forme d'algorithme mis en oeuvre par logiciel intégré dans les moyens logiciels du banc moteur.

L'eau chaude peut être fournie par exemple par un générateur d'eau chaude à résistance électrique.

L'eau froide peut être fournie par un moyen de refroidissement ou une source d'eau froide 90.

Grâce à cette disposition, la température de l'air à l'admission peut être régulée de manière très précise.

A cet effet, des moyens de mesure de température (non représentés) peuvent être avantageusement disposés au niveau de l'arrivée d'air 40 en amont du plénum d'admission 10, ou dans le plénum d'admission 10, et reliés aux moyens de pilotage de la température 31, configurés pour émettre la consigne de température Tcoll.

La consigne de température Tcoll est déterminée pour un banc moteur donné en fonction du moteur de référence (moteur cible) que celui-ci vise à simuler.

A cet effet, la consigne de température Tcoll est établie par les étapes consistant à :
- établir au préalable un modèle de température par la mesure, ou un calcul prédictif, sur un moteur de référence, de la température de l'air d'admission en fonction d'un ensemble de régimes dudit moteur de référence, et de préférence sur l'ensemble de la cartographie (régime, charge ou débit d'air) de fonctionnement dudit moteur de référence,
- mesurer le régime N du moteur sur banc au point de fonctionnement dudit moteur sur banc, ainsi que le débit d'air et
- déduire du modèle de température la consigne de température Tcoll à atteindre pour le moteur sur banc.

La consigne de température Tcoll est égale à la température de l'air d'admission du moteur de référence au régime et à la charge du moteur de référence correspondant au régime N et à la charge mesurés du moteur sur banc.

Grâce à l'invention, la température de l'air à l'admission peut être régulée avec une précision de +/-0,2 °C par rapport à la température de consigne Tcoll, notamment quel que soit le débit. De préférence, le débit d'air à l'admission est compris dans l'intervalle [1 ; 300 kg/h].

Le dispositif selon l'invention comprend également des moyens de pilotage d'une perte de charge à l'échappement, permettant de gérer l'acoustique échappement.

En référence, de nouveau à la figure 1, ces moyens de pilotage d'une perte de charge à l'échappement comprennent de préférence une vanne à l'échappement Vech disposée sur la ligne d'échappement 21 du banc moteur, et des moyens de pilotage de la position de la vanne à l'échappement Vech.

De préférence, la vanne à l'échappement est disposée dans le collecteur d'échappement 12 débouchant dans un plénum d'échappement 20, à la même distance D de la soupape d'échappement que la distance D entre la soupape d'échappement et la turbine du turbocompresseur du moteur cible.

Toutefois, dans un mode de réalisation, illustré à la figure 1, la vanne à l'échappement Vech est disposée sur la ligne d'échappement 21 en aval du plénum d'échappement 20, ce qui permet d'améliorer la tenue thermique de cette vanne.

Dans ce cas, un obstacle pourra être positionné dans le collecteur d'échappement 12, à une distance D de la soupape à l'échappement, afin de créer une onde acoustique similaire à celle dudit moteur cible, la distance D correspondant à la distance entre la soupape d'échappement et la turbine du turbocompresseur du moteur cible.

Par exemple, on pourra positionner en guise d'obstacle dans le collecteur d'échappement 12, un obstacle spécifique, une face (la face d'entrée) du plenum d'échappement 20, ou la vanne à l'échappement Vech, à cette distance D de la soupape d'échappement.

De préférence, les moyens de pilotage d'une perte de charge à l'échappement comprennent en outre des moyens de mesure d'une pression instantanée Pinst à l'échappement du moteur sur banc, et/ou des moyens de mesure d'une pression moyenne Pmoy à l'échappement du moteur sur banc.

A cet effet, le dispositif selon l'invention peut comprendre un capteur de pression instantanée et/ou un capteur de pression moyenne.

Dans un mode de réalisation, seul un capteur de pression instantanée est mis en oeuvre et la pression moyenne est calculée par une moyenne effectuée sur l'ensemble des mesures réalisées par ce capteur sur le cycle thermodynamique.

Avantageusement, le capteur de pression instantanée Pinst est disposé sur le collecteur d'échappement 12, et de préférence, au plus près de la soupape d'échappement, à une distance D'.

De préférence, le capteur de pression moyenne Pmoy est disposé dans le plénum d'échappement 20.

Le capteur de pression instantanée (et/ou le capteur de pression moyenne) ainsi que la vanne à l'échappement Vech peuvent être utilisés pour la mise en oeuvre du procédé selon l'invention.

En effet, le procédé selon l'invention vise à piloter une perte de charge à l'échappement.

Le pilotage d'une perte de charge à l'échappement comprend de préférence une étape consistant à :
- piloter la position d'une vanne à l'échappement Vech disposée sur une ligne d'échappement par une consigne de pression à l'échappement Pech.

Le pilotage de la position de la vanne à l'échappement Vech est mis en oeuvre par des moyens de pilotage 30 (figure 1). Les moyens de pilotage 30 peuvent être couplés aux moyens de pilotage de la température 31, de préférence sous forme d'algorithme mis en oeuvre par logiciel intégré dans les moyens logiciels du banc moteur.

Dans un mode de réalisation, la consigne de pression à l'échappement Pech est établie par les étapes consistant à :
- établir au préalable un modèle de pression moyenne à l'échappement en fonction du débit de comburant Qair et du débit de carburant Qe, pour une pluralité de régimes moteur pour un (ou le) moteur de référence, et de préférence sur l'ensemble de la cartographie (régime, charge ou débit d'air) de fonctionnement dudit moteur de référence,
- mesurer le régime N, le débit de comburant Qair et le débit de carburant Qe du moteur sur banc au point de fonctionnement, et
- déduire du modèle de pression moyenne à l'échappement la consigne de pression à l'échappement Pech à atteindre pour le moteur sur banc en fonction du régime N, du débit de comburant Qair et du débit de carburant Qe du moteur sur banc.

Le pilotage de la position de la vanne à l'échappement Vech est mis en oeuvre par l'écart entre la pression moyenne Pmoy mesurée, de préférence dans un plénum d'échappement 20, et la consigne de pression à l'échappement Pech.

Dans un autre mode de réalisation, optionnellement combinable, le pilotage de la position de la vanne à l'échappement Vech est mis en oeuvre par les étapes consistant à :
- établir au préalable un modèle de pression instantanée à l'échappement en fonction d'un ensemble de moments particuliers d'un cycle moteur de référence, et de préférence pendant la phase d'échappement du cycle thermodynamique, sur l'ensemble de la cartographie de fonctionnement du moteur de référence (régime, charge ou débit de comburant Qair et débit de carburant Qe),
- mesurer la pression instantanée Pinst du moteur sur banc en un moment particulier du cycle moteur, et
- piloter la position de la vanne Vech en fonction de l'écart entre la pression instantanée Pinst mesurée et la valeur de la pression instantanée du modèle de pression instantanée pour ce moment particulier, de préférence au même point de fonctionnement.

Le modèle de pression instantanée à l'échappement est établi à la distance D', distance réelle entre la soupape à l'échappement et le capteur de pression instantanée Pinst.

Grâce à cette configuration, l'invention présente une acoustique à l'échappement représentative des pulsations qui seraient obtenues sur le moteur cible, ce qui permet avantageusement de piloter les gaz brûlés résiduels.

L'ensemble des moments particuliers peut être en base temporelle ou en angle vilebrequin.

Dans un mode de réalisation, le moment particulier pour la mesure de la pression instantanée Pinst du moteur sur banc est la fermeture de la soupape d'échappement (RFE), ou un moment proche de celui-ci.

Avantageusement, la mesure de la pression instantanée Pinst est effectuée en sortie de la soupape d'échappement du moteur sur banc.

Le choix du modèle de pression (instantanée/moyenne) peut se faire par exemple de sorte que :
- la puissance spécifique du moteur de référence utilisé pour le modèle et la puissance spécifique du moteur sur banc soient les plus proches possibles l'une de l'autre, voire égales,
- la modélisation de l'acoustique à l'échappement intègre les particularités géométriques du moteur de référence, à savoir à l'ordre 1, le nombre de cylindres, la distance D entre la soupape à l'échappement et la turbine du turbocompresseur.

Grâce à l'invention, la pression à l'échappement peut être régulée avec une précision de +/- 5 mbar.

## Revendications

1. Procédé de suralimentation d'un moteur monocylindre sur banc, le procédé comprenant des étapes consistant à :
- conditionner de l'air à l'admission du moteur sur banc,
- régler le moteur sur banc en un point de fonctionnement déterminé pour simuler le comportement d'un moteur cible, et
- piloter une perte de charge à l'échappement dudit moteur sur banc par la position d'une vanne à l'échappement (Vech) disposée sur une ligne d'échappement du moteur sur banc et pilotée par une consigne de pression à l'échappement (Pech),
**caractérisé en ce que** la consigne de pression à l'échappement (Pech) est établie par des étapes consistant à :
- établir au préalable un modèle de pression moyenne à l'échappement en fonction du débit de comburant et du débit de carburant, pour une pluralité de régimes moteur pour un moteur de référence,
- mesurer le régime (N), le débit de comburant (Qair) et le débit de carburant (Qe) du moteur sur banc au point de fonctionnement, et
- déduire du modèle de pression moyenne à l'échappement la consigne de pression à l'échappement (Pech) à atteindre pour le moteur sur banc en fonction du régime (N), du débit de comburant (Qair) et du débit de carburant (Qe) du moteur sur banc.

2. Procédé de suralimentation selon la revendication 1, dans lequel le conditionnement de l'air à l'admission comprend une étape consistant à :
- réguler la température de l'air à l'admission par un échangeur air/eau froide et par un échangeur air/eau chaude montés en parallèle et munis de volets contrarotatifs en fonction d'une consigne de température (Tcoll).

3. Procédé de suralimentation selon la revendication 2, dans lequel la consigne de température (Tcoll) est établie par des étapes consistant à :
- établir au préalable un modèle de température par la mesure, ou un calcul prédictif, sur un moteur de référence, de la température de l'air d'admission en fonction d'un ensemble de régimes dudit moteur de référence,
- mesurer le régime (N) du moteur sur banc au point de fonctionnement dudit moteur sur banc, ainsi que le débit d'air, et
- déduire du modèle de température la consigne de température (Tcoll) à atteindre pour le moteur sur banc.

4. Procédé de suralimentation selon l'une quelconque des revendications précédentes, dans lequel le pilotage de la position de ladite vanne à l'échappement (Vech) est mis en oeuvre par l'écart entre la pression moyenne (Pmoy) mesurée dans un plénum d'échappement (3) et la consigne de pression à l'échappement (Pech).

5. Procédé de suralimentation selon l'une quelconque des revendications précédentes, dans lequel le pilotage de la position de ladite vanne à l'échappement (Vech) est mis en oeuvre par des étapes consistant à :
- établir au préalable un modèle de pression instantanée à l'échappement en fonction d'un ensemble de moments particuliers d'un cycle de fonctionnement du moteur de référence, pour un ensemble de points de fonctionnement dudit moteur de référence,
- mesurer la pression instantanée (Pinst) du moteur sur banc en un moment particulier (RFE) du cycle moteur au point de fonctionnement du dit moteur sur banc, et
- piloter la position de la vanne (Vech) en fonction de l'écart entre la pression instantanée (Pinst) mesurée au point de fonctionnement du dit moteur sur banc et la valeur de la pression instantanée du modèle de pression instantanée pour ce moment particulier du dit moteur de référence.

6. Procédé de suralimentation selon la revendication 7, dans lequel le moment particulier pour la mesure de la pression instantanée (Pinst) du moteur sur banc est la fermeture de la soupape d'échappement (RFE) de ce moteur, ou un moment proche de celui-ci, et/ou dans lequel la mesure de la pression instantanée (Pinst) est effectuée au plus près de la soupape d'échappement dudit moteur sur banc.

7. Procédé de suralimentation selon l'une quelconque des revendications précédentes, dans lequel un obstacle est positionné dans le collecteur d'échappement (12) à une distance (D) correspondant à la distance entre la soupape d'échappement et la turbine du turbocompresseur du moteur cible.

8. Dispositif de suralimentation d'un banc moteur monocylindre susceptible de mettre en oeuvre le procédé selon l'une quelconque des revendications précédentes, le dispositif comprenant :
- des moyens de conditionnement de l'air à l'admission du banc moteur,
- des moyens de pilotage d'une perte de charge à l'échappement comprenant :
- une vanne à l'échappement (Vech) disposée sur la ligne d'échappement du banc moteur, et
- des moyens de pilotage de la position de la vanne à l'échappement (Vech), par une consigne de pression à l'échappement (Pech),
- un modèle de pression moyenne à l'échappement en fonction du débit de comburant et du débit de carburant, pour une pluralité de régimes moteur pour un moteur de référence,
- des moyens pour mesurer le régime (N), le débit de comburant (Qair) et le débit de carburant (Qe) du moteur sur banc au point de fonctionnement, et
- des moyens pour déduire du modèle de pression moyenne à l'échappement la consigne de pression à l'échappement (Pech) à atteindre pour le moteur sur banc en fonction du régime (N), du débit de comburant (Qair) et du débit de carburant (Qe) du moteur sur banc.

9. Dispositif selon la revendication 10, comprenant en outre :
- des moyens de mesure d'une pression instantanée (Pinst) à l'échappement du moteur sur banc, et/ou
- des moyens de mesure d'une pression moyenne (Pmoy) à l'échappement du moteur sur banc.

10. Dispositif selon l'une quelconque des revendications 8 ou 9, comprenant en outre :
- des moyens de régulation de la température de l'air à l'admission en fonction d'une consigne de température (Tcoll), lesdits moyens de régulation comprenant un échangeur air/eau froide et un échangeur air/eau chaude montés en parallèle et munis de volets contrarotatifs.
